# EUROPEAN PATENT APPLICATION

(11) **EP 2 429 086 A1**
(43) Date of publication of application: **14.03.2012**
(21) Application number: 10176582.4
(22) Date of filing: 14.09.2010
(51) Int. Cl.: H04B 1/04, H04B 1/40

(54) **System and device**

(71) Applicant: Sony Ericsson Mobile Communications AB, 221 88 Lund (SE)
(72) Inventor: Lundell, Patrik, 223 43 Svedala (SE); Wolff, Martin, 223 55 Lund (SE)
(74) Representative: VALEA AB

(57) **Abstract**

System comprising an antenna (10), an antenna matching network (12), an amplifier of a radio frequency (RF) module (14), a matching circuit (16), and a switch (18). The switch (18) is configured to selectively connect said amplifier (14) to test apparatus (24) via said matching circuit (16) when in a first position, and to said antenna (10) via said antenna matching network (12) when it is in a second position.

## Description

### TECHNICAL FIELD

The present invention concerns a system comprising an antenna, an antenna matching network, an amplifier of a radio frequency (RF) module and a matching circuit. The present invention also concerns a device comprising such a system.

### BACKGROUND OF THE INVENTION

In the field of electronics, impedance matching is the practice of designing the input impedance of an electrical load or the output impedance of its corresponding signal source in order to maximize power transfer and minimize reflections from the load.

Almost all mobile telephony system requirements in the original Group System for Mobile Communications (GSM) specification were specified for the conducted performance of a system so impedance matching has only conventionally been carried out for the conducted mode. However, as GSM technology develops and Long Term Evolution (LTE) is being introduced, more frequency bands need to be supported and matching circuits will have to be optimized to cover all frequency bands for both the conducted and the radiated performance of the systems in order to be able to transmit signals more efficiently.

### SUMMARY OF THE INVENTION

An object of the invention is to provide an improved system comprising an antenna, an antenna matching network, an amplifier of a radio frequency (RF) module, i.e. receiver, transmitter or transceiver circuitry, and a matching circuit.

This object is achieved by a system that includes a switch that is configured to selectively connect the amplifier to test apparatus for determining the RF parameters of signals via the matching circuit when in a first position. The switch is also configured to connect the amplifier to the antenna via the antenna matching network when it is in a second position. Such a system will enable the optimization of the matching circuit taking both the conducted performance of the system (i.e. when the switch is in the first position) and the radiated performance of the system (i.e. when the switch is in the second position) into consideration and will consequently result in the system being able to transmit signals more efficiently when in use. Such a system is particularly suitable for use in LTE-technology applications. It also provides a simple switch that may be used for optimizing the system prior to use and for connecting system components when the system is in use.

According to another embodiment of the invention the system comprises additional dual matching circuitry.

According to another embodiment of the invention at least part of the switch is arranged as a module on a substrate that is arranged to be connected between the amplifier and the antenna. According to a further embodiment of the invention the substrate comprises dielectric material or ceramic material, such as low temperature co-fired ceramic (LTCC). The substrate may comprise a printed circuit board comprising one or more electric circuits or electronic components, an antenna matching network, an antenna or test apparatus.

According to an embodiment of the invention the switch comprises at least one coaxial switch so that coaxial cable may be used to connect the switch to test apparatus and/or to connect the switch to the coaxial cables of a system comprising an antenna, an antenna matching network, an amplifier of a radio frequency (RF) module and a matching circuit. The switch may for example be a 50 ohm switch.

The present invention also concerns a device that comprises at least one system according to any of the embodiments of the invention. According to an embodiment of the invention the device is a communication device such as a mobile telephone, media player, Personal Communications System (PCS) terminal, Personal Data Assistant (PDA), laptop computer, palmtop receiver, camera, television, radar or any appliance that includes a transducer designed to transmit and/or receive radio, television, telephone and/or radar signals.

### BRIEF DESCRIPTION OF THE DRAWINGS

The present invention will hereinafter be further explained by means of non-limiting examples with reference to the appended schematic figures where;
- Figure 1: shows a system according to the prior art,
- Figures 2-5: show systems according to embodiments of the invention, and
- Fig. 6: shows a device according to an embodiment of the invention.

It should be noted that the drawings have not been drawn to scale and that the dimensions of certain features have been exaggerated for the sake of clarity.

### DETAILED DESCRIPTION OF EMBODIMENTS

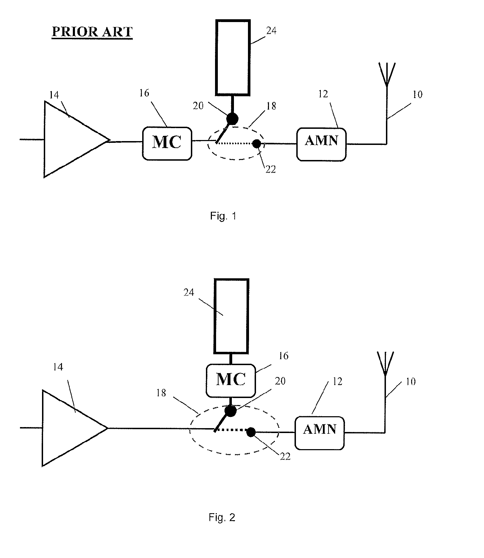

Figure 1 shows a system according to the prior art. The system comprises an antenna 10, an antenna matching network (AMN) 12, a power amplifier of a radio frequency (RF) module 14, a matching circuit (MC) 16, and a switch 18 comprising two electrical contact points, contacts 20, 22.

A test apparatus 24 may be connected to contact 20 (as shown in figure 1) to measure signal RF parameters. During the optimization procedure the RF input and RF output of the amplifier 14 are connected to the test apparatus 24, using coaxial cables for example. A signal from a suitable generator is applied to the RF amplifier. The RF output under a 50 ohm load (for example) is monitored via an RF power meter and spectrum analyzer. Test data may then be analyzed and the matching circuit 16 may be optimized until the desired signal RF parameters are obtained.

Such optimization of the matching circuit 16 only takes the conducted performance of the system into consideration and not the radiated performance. When the system is in use the matching circuit 16 will however affect both the conducted performance and the radiated performance of the system, and the efficiency of the system in transmitting signals between the amplifier 14 and the antenna 10 will therefore be adversely affected since the system has not been optimized for both conducted and radiated performance.

Alternatively, when the system is in use (after optimization), the amplifier 14 is connected to the antenna 10 via the matching circuit 16 and the antenna matching network 12 (i.e. when the switch 19 is in the position indicated by the dotted line in figure 1) so that signals may be transmitted from the amplifier 14 to the antenna 10 and/or from the antenna 10 to a receiver.

Figure 2 shows a system according to an embodiment of the invention. The system comprises an antenna 10, an antenna matching network 12, a power amplifier 14 of a radio frequency (RF) module, a matching circuit 16, and a switch 18 having two contacts 20, 22. During optimization of the matching circuit 16 the switch 18 is configured to connect the amplifier 14 to test apparatus 24 via the matching circuit 16, i.e. the switch is in a first position indicated by the solid line in figure 2. The antenna 10 and antenna matching network 12 are thereby disconnected and the conductive performance of the system will thereby be measured.

When the switch 18 is in a second position indicated by the dotted line in figure 2 the amplifier 14 will be connected to the antenna 10 via the antenna matching network 12. The test apparatus and the matching circuit 16 are thereby disconnected and the radiative performance of the system will thereby be measured.

The switch 18 may comprise any suitable means of connecting the components of the system as disclosed above. The switch 18 may for example comprise a spring-loaded mechanical probe that is arranged to be moved between a first position in which the amplifier 14 will be connected to test apparatus 24 via a matching circuit 16 and a second position in which the amplifier 14 will be connected to the antenna 10 via the antenna matching network 12.

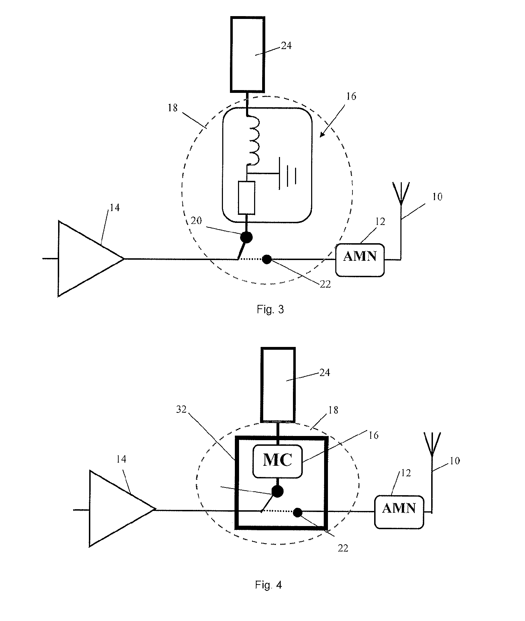

Figure 3 shows a system in which the matching circuit 16 is placed under the switch to obtain a more compact layout. It should be noted that figure 3 shows only an example of the circuitry that may be used in a matching circuit 16. Many different embodiments of such a matching circuit 16 are known to the skilled person.

Figure 4 shows that the entire switch 18 may be provided as an insertable and (optionally) removable module on a substrate 32, such as a low temperature co-fired ceramic (LTCC) substrate, which is arranged to be connected between the amplifier 14 and the antenna matching network 12. The substrate 32 may be arranged to comprise at least part of a switch 18 of a system according to any of the embodiments of the invention. The substrate 32 may even be arranged to comprise an antenna matching network 12, an antenna 10, test apparatus 24, and/or any other electric components or electrical circuits.

It should be noted that the switch 18 of a system according to any of the embodiments of the invention may comprise a coaxial switch so that it may be connected to the coaxial cable of a test apparatus 24 and/or to a coaxial cable of a system comprising an antenna, an antenna matching network, an amplifier of a radio frequency (RF) module and a matching circuit.

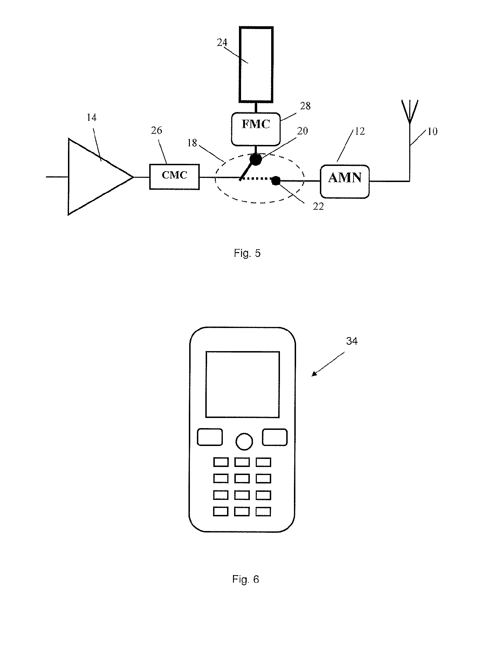

Figure 5 shows a system according to an embodiment of the invention which comprises additional dual matching circuitry, namely a course matching circuit 26 and a fine matching circuit 28.

It should be noted that the systems illustrated and described in this patent application may comprise one or more additional components. The systems may for example comprise an antenna switch or front end module to connect an antenna to any one of a plurality of amplifiers for example to switch in different frequency bands.

Figure 6 shows a device 34, namely a mobile telephone, which comprises a system according to any of the embodiments of the invention.

Further modifications of the invention within the scope of the claims would be apparent to a skilled person.

## Claims

1. System comprising an antenna (10), an antenna matching network (12), an amplifier (14) of a radio frequency (RF) module and a matching circuit (16), **characterized in that** said system includes a switch (18) that is configured to selectively connect said amplifier (14) to test apparatus (24) via said matching circuit (16) when in a first position, and to said antenna (10) via said antenna matching network (12) when it is in a second position.

2. System according to claim 1, **characterized in that** to comprises additional dual matching circuitry.

3. System according to claim 1 or 2, **characterized in that** at least part of said switch (18) is arranged as a module on a substrate (32) that is arranged to be connected between said amplifier (14) and said antenna (10).

4. System according to claim 3, **characterized in that** said substrate (32) comprises dielectric material or ceramic material, such as low temperature co-fired ceramic (LTCC).

5. System according to any of the preceding claims, **characterized in that** said switch (18) comprises a coaxial switch.

6. Device (34), **characterized in that** it comprises a system according to any of the preceding claims.

7. Device (34) according to claim 6, **characterized in that** it is a communication device such as a mobile telephone, media player, Personal Communications System (PCS) terminal, Personal Data Assistant (PDA), laptop computer, palmtop receiver, camera, television, radar or any appliance that includes a transducer designed to transmit and/or receive radio, television, telephone and/or radar signals.
